# DEMANDE DE BREVET EUROPEEN

(11) **EP 2 762 265 A1**
(43) Date de publication de la demande: **06.08.2014**
(21) Numéro de dépôt: 14153267.1
(22) Date de dépôt: 30.01.2014
(51) Int. Cl.: B23K 37/00, B23K 37/047, B23K 26/12, B23K 26/60, B23Q 11/08, F16P 1/06

(54) **Cabine de protection contre un rayonnement électromagnétique, par exemple un rayonnement laser**

(30) Priorité: 30.01.2013 FR 1350774
(71) Demandeur: SPIE SA, 95800 Cergy-Pontoise (FR)
(72) Inventeur: La désignation de l'inventeur n'a pas encore été déposée
(74) Mandataire: Reboussin, Yohann Mickaël Noël

(57) **Abrégé**

L'invention concerne une cabine (100) de protection contre un rayonnement électromagnétique, tel qu'un rayonnement laser. Elle comprend un plateau tournant (1) autour d'un axe de rotation capable de transporter des pièces, lesquelles sont destinées à être soumises au rayonnement puis récupérées, à travers une ouverture formée dans la cabine et un bouclier (3) contre le rayonnement électromagnétique monté fixe sur le plateau tournant (1), de sorte que ce bouclier (3) est entraîné en rotation avec le plateau tournant (1) autour de son axe de rotation lorsque ce dernier (3) est actionné. Elle comprend également au moins un volet (4) dit supérieur s'étendant le long de la partie supérieure du bouclier (3) sur la largeur de l'ouverture et au moins un dispositif pour translater le ou chaque volet (4) supérieur, par rapport au bouclier, entre une position basse et une position haute et inversement selon la direction définie par de l'axe de rotation du plateau tournant (3). Ce dispositif de translation ne nécessite aucun actionneur dédié et n'est activé que du seul fait de la rotation du plateau tournant.

## Description

L'invention concerne une cabine de protection contre un rayonnement électromagnétique.

Ce rayonnement électromagnétique est destiné à être émis par un système à loger à l'intérieur de ladite cabine. Il peut s'agir d'un rayonnement laser.

Par exemple, de telles cabines sont employées pour protéger un utilisateur d'un rayonnement laser émis par un système laser logé dans la cabine et servant à la soudure et/ou découpe de pièces mécaniques.

Ces cabines prévoient généralement un plateau tournant qui permet de disposer une ou plusieurs pièce(s) depuis l'extérieur de la cabine, puis par rotation du plateau, de les disposer dans la cabine.

Le système laser peut alors être actionné, par exemple pour effectuer un soudage des pièces introduites dans la cabine.

De nombreuses cabines de ce type ont déjà été proposées.

C'est par exemple le cas du document US 5 464 963.

Dans ce document, la cabine comprend un plateau tournant et un bouclier de protection contre le rayonnement laser, monté fixe sur le plateau tournant.

L'actionnement du plateau tournant s'effectue par un actionneur commandé par un contrôleur.

Ainsi, lorsque le contrôleur envoie une information à l'actionneur, ce dernier fait tourner à la fois le plateau tournant et le bouclier de protection. L'actionneur permet donc à la fois le déplacement du plateau et du bouclier, ce qui est particulièrement avantageux en termes de maintenance.

Par ailleurs, l'étanchéité entre le volet et le bâti de la cabine est assuré par un profilé en forme de H, logé dans le bâti de la cabine, lequel profilé vient coopérer avec le contour externe du volet.

Cependant, le dispositif d'étanchéité proposé dans ce document engendre plusieurs inconvénients.

Tout d'abord, ce dispositif d'étanchéité ne permet aucun réglage au niveau de l'interface entre le bouclier et le bâti de la cabine.

De plus, ce dispositif d'étanchéité limite le mouvement du plateau tournant et du bouclier monté fixe sur ce plateau à une rotation de 180°.

L'utilisation de la cabine comportant un tel dispositif d'étanchéité n'est donc pas très flexible.

Enfin, au niveau de l'axe de rotation du plateau, il est nécessaire de prévoir des moyens d'étanchéité particuliers pour assurer l'étanchéité (voir col.6, lignes 7-41 ; figure 10 de ce document).

Or, la performance de tels moyens peut se dégrader dans le temps sous l'effet des rotations successives du plateau et du bouclier monté fixe sur le plateau.

On peut également s'interroger sur la durée de vie du profilé en H qui subit les à-coups successifs du bouclier contre le bâti de la cabine.

Dans le document US 5 724 212, on propose de mettre en place des volets pour assurer l'étanchéité de la cabine entre la paroi fixe de la cabine et le bouclier de protection. Ce dispositif de volets permet notamment un réglage au niveau de l'interface entre le bouclier et le bâti de la cabine. Cette solution est donc plus flexible que la solution proposée dans le document US 5 464 963. Cependant, pour actionner les volets, il est prévu des actionneurs actifs (« cylinders ») qui sont susceptibles de générer des problèmes de maintenance et sont par ailleurs consommateurs d'énergie.

Un objectif de l'invention est de proposer une cabine de protection contre un rayonnement électromagnétique, notamment un rayonnement laser, ne présentant pas l'un au moins des inconvénients précités.

A cet effet, l'invention propose une cabine de protection contre un rayonnement électromagnétique, par exemple un rayonnement laser, destiné à être émis par un système à loger à l'intérieur de ladite cabine, laquelle comprend :
- un plateau tournant autour d'un axe de rotation capable de transporter des pièces, lesquelles sont destinées à être soumises au rayonnement électromagnétique puis récupérées, à travers une ouverture formée dans la cabine ;
- un bouclier contre le rayonnement électromagnétique monté fixe sur le plateau tournant, de sorte que ce bouclier est entraîné en rotation avec le plateau tournant autour de son axe de rotation lorsque ce dernier est actionné ;
   caractérisée en ce qu'elle comprend :
   - au moins un volet dit supérieur s'étendant le long de la partie supérieure du bouclier sur la largeur de l'ouverture ; et
   - au moins un dispositif pour translater le ou chaque volet supérieur, par rapport au bouclier, entre une position basse et une position haute et inversement selon la direction définie par l'axe de rotation du plateau tournant, ledit dispositif de translation comprenant :
   - un galet monté fixe sur le bâti supérieur de la cabine défini au niveau de l'ouverture ;
   - un arbre, monté mobile en translation à la fois par rapport au bouclier et au ou à chaque volet supérieur, comportant une extrémité susceptible d'être mise en contact avec ledit galet lors du passage de la position d'ouverture à la position de fermeture de la cabine pour provoquer la translation de l'arbre par rapport au bouclier ;
   - des moyens disposés entre l'arbre et le ou chaque volet supérieur pour translater ledit au moins un volet supérieur par rapport à l'arbre dans un sens opposé au sens de translation de l'arbre par rapport au bouclier ;
de sorte que, d'une part, lorsque le plateau tournant est actionné depuis une position d'ouverture vers une position de fermeture de la cabine, le ou chaque volet supérieur translate depuis sa position basse vers sa position haute dans laquelle une étanchéité entre le bouclier et le contour du bâti supérieur défini au niveau de l'ouverture est assurée et de sorte que, d'autre part, lorsque le plateau tournant est actionné depuis une position de fermeture vers une position d'ouverture de la cabine, le ou chaque volet supérieur translate depuis sa position haute vers sa position basse pour permettre une rotation du bouclier avec le ou chaque volet supérieur autour de l'axe de rotation du plateau tournant.

La cabine selon l'invention pourra également comprendre l'une au moins des caractéristiques suivantes, prises seules ou en combinaison :
- lesdits moyens pour translater le ou l'un des volet(s) par rapport à l'arbre comprennent une première crémaillère fixée sur l'arbre, une deuxième crémaillère fixée sur le volet supérieur et un dispositif d'engrènement reliant les deux crémaillères ;
- le dispositif d'engrènement comprend :
   - un premier engrenage monté sur l'une des crémaillères ;
   - un deuxième engrenage, monté sur l'autre des deux crémaillères, dont le diamètre est différent du diamètre du premier engrenage ;
   - un arbre reliant les deux engrenages,
   de sorte que le déplacement de l'arbre par rapport au bouclier est démultiplié en comparaison au déplacement du volet supérieur par rapport au bouclier;
- lesdits moyens pour translater le ou l'un des volet(s) supérieurs par rapport à l'arbre comprennent également :
   - un boîtier monté fixe sur l'arbre ;
   - un axe de guidage monté fixe sur le ou chaque volet supérieur, ledit axe de guidage étant monté selon une liaison glissière par rapport au boîtier ;
- la cabine comprend également un premier volet supérieur s'étendant le long de la partie supérieure d'une première face du bouclier, sur la largeur de l'ouverture, un deuxième volet supérieur s'étendant le long de la partie supérieure d'une deuxième face du bouclier, opposée à la première face de ce bouclier et un dispositif pour translater, en même temps, chacun des deux volets par rapport au bouclier, entre une position basse et une position haute et inversement, ce dispositif étant disposé entre les deux volets ;
- la cabine comprend au moins un volet dit inférieur s'étendant le long de la partie inférieure du bouclier sur la largeur de l'ouverture située entre le plateau tournant et le bâti gauche ou droit de la cabine et un dispositif pour translater le ou chaque volet inférieur, par rapport au bouclier, entre une position haute et une position basse et inversement, selon la direction définie par l'axe de rotation du plateau tournant, de sorte que, d'une part, lorsque le plateau tournant est actionné depuis une position d'ouverture vers une position de fermeture de la cabine, le ou chaque volet inférieur translate depuis sa position haute vers sa position basse dans laquelle une étanchéité entre le bouclier et le bâti gauche ou droit de la cabine défini au niveau de l'ouverture est assurée et de sorte que, d'autre part, lorsque le plateau tournant est actionné depuis une position de fermeture vers une position d'ouverture de la cabine, le ou chaque volet inférieur translate depuis sa position basse vers sa position haute pour permettre une rotation du bouclier avec le ou chaque volet inférieur autour de l'axe de rotation du plateau tournant ;
- le dispositif pour translater le ou chaque volet inférieur par rapport au bouclier entre une position haute et une position basse et inversement, comprend :
   - au moins un axe de guidage en translation du ou de chaque volet inférieur, ledit axe étant monté fixe sur le bouclier ;
   - un moyen de guidage monté fixe sur le volet ou l'un des volets et mobile en translation le long de l'axe de guidage ;
   - une pièce de liaison, par exemple en forme de U, montée fixe sur le ou chaque volet ;
   - une tringle dont une première extrémité est montée sur une extrémité de l'arbre d'entraînement du ou de chaque volet supérieur et dont l'autre extrémité est montée sur la pièce de liaison, la liaison entre la tringle et l'arbre d'entraînement permettant de translater le ou chaque volet inférieur vers une position basse lorsque le ou chaque volet supérieur passe dans une position haute et inversement ;
   - la cabine comprend un premier volet inférieur s'étendant le long de la partie inférieure d'une première face du bouclier et monté sur l'axe de guidage par l'intermédiaire du moyen de guidage ; un deuxième volet inférieur s'étendant le long de la partie inférieure d'une deuxième face du bouclier, laquelle est opposée à la première face de ce bouclier, par l'intermédiaire de la pièce de liaison ; un dispositif pour translater les deux volets inférieurs, en même temps, par rapport au bouclier, entre une position haute et une position basse et inversement.
- la cabine comprend au moins un premier volet inférieur s'étendant le long de la partie inférieure du bouclier sur la largeur de l'ouverture située entre le plateau tournant et le bâti droit de la cabine ; au moins un deuxième volet inférieur s'étendant le long de la partie inférieure du bouclier sur la largeur de l'ouverture située entre le bâti gauche de la cabine et le plateau tournant ; un dispositif associé à chacun dudit au moins un premier volet inférieur et dudit au moins un deuxième volet inférieur pour translater le volet inférieur concerné par rapport au bouclier, entre une position haute et une position basse et inversement ;
- chacun des deux dispositifs pour translater un volet inférieur associé à l'une des ouvertures de la cabine est relié mécaniquement, par exemple par l'intermédiaire d'une tringle, à l'un et l'un seulement d'un dispositif pour translater ledit au moins un volet supérieur.

L'invention sera mieux comprise et d'autres buts, avantages et caractéristiques de celle-ci apparaîtront plus clairement à la lecture de la description qui suit et qui est faite au regard des figures annexées, sur lesquelles :

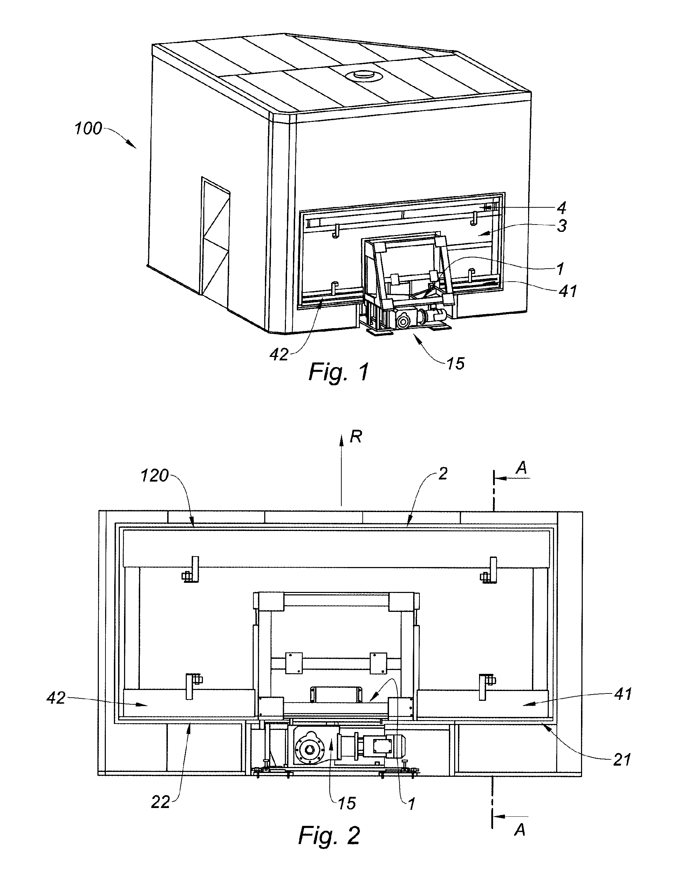

- la figure 1 représente, selon une vue en perspective, une cabine conforme à l'invention, en position de fermeture de la cabine ;
- la figure 2 représente une vue partielle, de face, de la cabine représentée sur la figure 1 ;
- la figure 3 représente une vue selon la coupe A-A de la cabine représentée sur la figure 2 ;
- la figure 4 est une vue agrandie de la figure 3, au niveau de la zone A, sur laquelle est représentée, selon un mode de réalisation préférentiel, un dispositif pour translater un volet supérieur de la cabine par rapport à un bouclier de cette cabine, ce dispositif permettant d'assurer l'étanchéité au niveau de l'interface entre la partie supérieure du bouclier et le bâti de la cabine ;
- la figure 5 est une vue agrandie de la figure 3, au niveau de la zone B, sur laquelle est représentée, selon un mode de réalisation préférentiel, un dispositif pour translater un volet inférieur de la cabine par rapport au bouclier, ce dispositif permettant d'assurer l'étanchéité au niveau de l'interface entre la partie inférieure du bouclier et le bâti de la cabine ;
- la figure 6 est une vue partielle, de dessus, de volets supérieurs représentés sur la figure 4 ;
- la figure 7 est une vue partielle selon la coupe B-B identifiée sur la figure 6 ;
- la figure 8 est une vue partielle selon la coupe C-C identifiée sur la figure 6, cette vue correspondant à une vue de face du dispositif représenté sur la figure 4 ;
- la figure 9 est une vue partielle de la cabine représentée sur la figure 1 ;
- la figure 10 est une vue similaire à celle qui est représentée sur la figure 3, mais en position d'ouverture de la cabine.

La description qui suit est effectuée dans le cadre d'un système émettant un rayonnement laser. Toutefois, elle pourrait s'appliquer à d'autres types de rayonnements électromagnétiques.

La cabine 100 est munie d'un plateau tournant 1 et d'un bouclier 3 contre le rayonnement laser monté fixe sur le plateau tournant 1.

Le plateau tournant 1 peut tourner autour d'un axe de rotation R, qui sera généralement vertical, selon une rotation quelconque. A cet effet, le plateau tournant 1 est relié à un moteur 15. Ce plateau 1 permet de transporter des pièces destinées à être soumises au rayonnement laser puis récupérées, à travers une ouverture 2 formée dans la cabine 100.

Dans la mesure où le bouclier 3 est monté fixe sur le plateau tournant 1, ce dernier est entraîné en rotation avec le plateau tournant 1 autour de son axe de rotation R sous l'action du moteur 15.

La cabine 100 est également munie d'au moins un volet dit supérieur 4, 4' s'étendant le long de la partie supérieure du bouclier 3 sur la largeur de l'ouverture 2.

Le volet supérieur 4 est destiné à obstruer l'espace formé entre la partie supérieure du bouclier 3 et le bâti supérieur 120 de la cabine 100, lequel bâti supérieur 120 est défini au niveau de l'ouverture 2.

A cet effet, la cabine 100 comporte un dispositif 5, 6, 7, 8, 9, 10, 101, 102, 20 pour translater le ou chaque volet supérieur, par rapport au bouclier, entre une position basse et une position haute et inversement.

Cette translation s'effectue selon la direction définie par l'axe de rotation R du plateau tournant 1, c'est-à-dire dans le cas d'espèce, verticalement.

Ainsi, lorsque le plateau tournant 1 est actionné par le moteur 15 depuis une position d'ouverture vers une position de fermeture de la cabine 100, le volet supérieur 4, 4' translate depuis sa position basse vers sa position haute dans laquelle une étanchéité entre le bouclier 3 et le bâti supérieur 120 est assurée.

Le volet supérieur 4 est donc en position haute lorsque l'ouverture 2 est obstruée dans sa partie supérieure, c'est-à-dire lorsque la cabine 100 est dans sa position de fermeture étanche permettant, en toute sécurité, la mise en route du système laser logé dans la cabine.

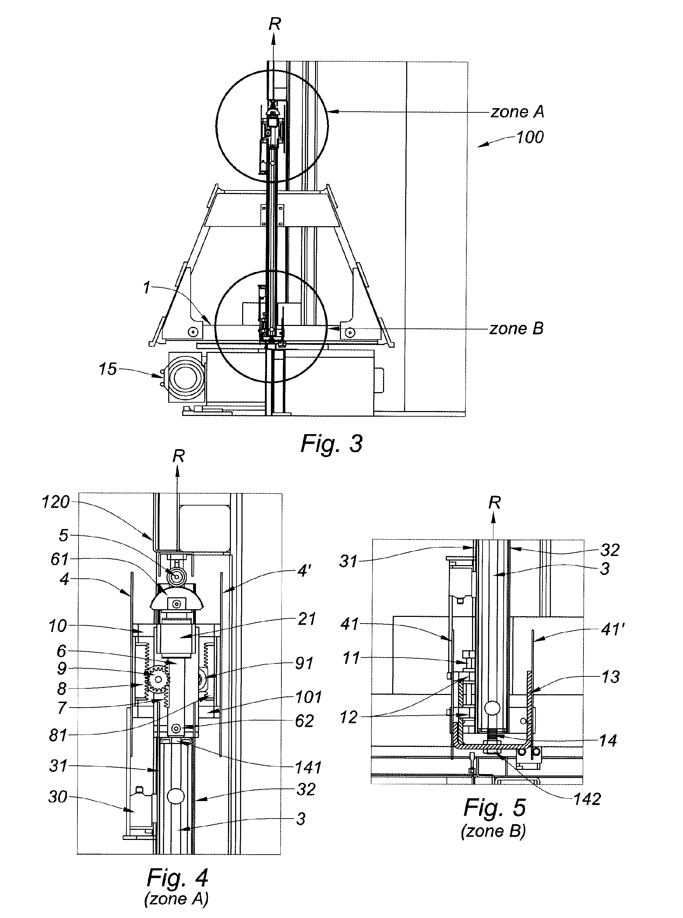

La position de fermeture de la cabine 100 est représentée, par exemple, sur la figure 4.

Le dispositif 5, 6, 7, 8, 9, 10, 101, 102, 20 pour translater le volet supérieur 4, 4', par rapport au bouclier 3, entre une position basse et une position haute et inversement comprend plusieurs éléments.

Il prévoit ainsi un galet 5 monté fixe sur le bâti supérieur 120 de la cabine 100, qui est défini au niveau de l'ouverture 2.

Il prévoit un arbre 6, monté mobile en translation à la fois par rapport au bouclier 3 et au volet supérieur 4, pour entraîner ce volet. Cet arbre d'entraînement 6 comporte une extrémité 61, telle qu'une came, susceptible d'être mise en contact avec le galet 5 lors du passage de la position d'ouverture à la position de fermeture de la cabine 100.

Lors de la fermeture de la cabine, la mise en contact entre l'arbre d'entraînement 6 et le galet 5 provoque la translation de l'arbre 6 par rapport au bouclier 3 selon la direction de l'axe de rotation R, dans un sens qui fait descendre l'arbre 6 vers le bouclier 3.

Il prévoit également des moyens 7, 8, 9, 10, 101, 102, 20 disposés entre l'arbre d'entraînement 6 et le volet supérieur 4 pour translater le volet supérieur 4 par rapport à l'arbre 6 dans un sens opposé au sens de translation de l'arbre 6 par rapport au bouclier 3.

Ainsi, lorsque le galet 5 interagit avec l'arbre 6, ce dernier descend en direction du bouclier 3, cette descente provoquant la remontée, toujours selon l'axe R, du volet supérieur 4.

Bien entendu, le galet 5 reste en contact avec l'arbre d'entraînement 6 du volet supérieur 4 aussi longtemps que la cabine 100 est dans sa position de fermeture, si bien que, dans la position de fermeture de la cabine 100, le volet supérieur 4 est maintenu dans une position haute.

Lorsque le plateau tournant 1 est actionné depuis une position de fermeture vers une position d'ouverture de la cabine 100 sous l'effet du moteur 15, le volet supérieur 4 translate alors depuis sa position haute vers sa position basse pour permettre une rotation du bouclier 3 avec le volet supérieur 4 autour de l'axe de rotation R du plateau tournant 1.

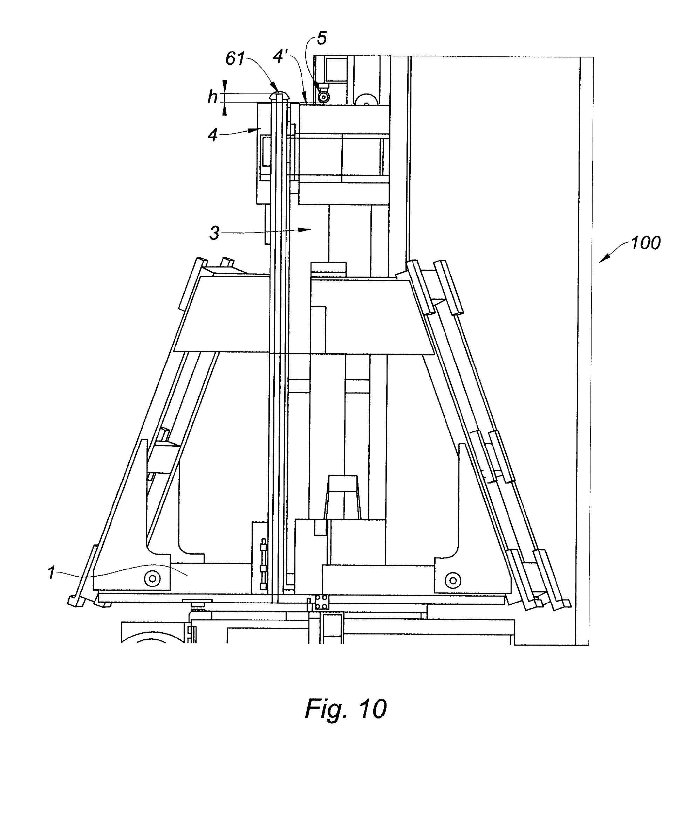

Une position d'ouverture de la cabine 100 est par exemple représentée sur la figure 10.

L'opération d'ouverture de la cabine 100 permet le désengagement de l'extrémité 61 de l'arbre 6 du galet 5. Le galet 5 n'exerce alors plus d'effort sur l'arbre 6 qui remonte, toujours selon la direction de l'axe R, sous l'effet du poids propre du volet supérieur 4.

Lorsque la cabine 100 passe de sa position de fermeture vers sa position d'ouverture, le volet supérieur 4 descend donc naturellement vers sa position basse.

Cette position basse du volet supérieur 4 autorise la rotation de celui-ci avec le bouclier 3 et le plateau tournant 1 sans risque de butée dudit volet supérieur contre le galet 5 et a fortiori, contre le bâti de la cabine 100.

En effet, en comparant la représentation de la figure 10 (position d'ouverture de la cabine) et celle de la figure 3 (position de fermeture de la cabine), on constate que les volets supérieurs 4, 4' sont dans une position basse. Ils sont donc situés en dessous du galet 5. Par ailleurs, on constate que l'arbre 6 est dans une position haute, l'extrémité supérieure 61 visible sur la figure 10 étant plus haut, d'une différence de hauteur h, par rapport au galet 5.

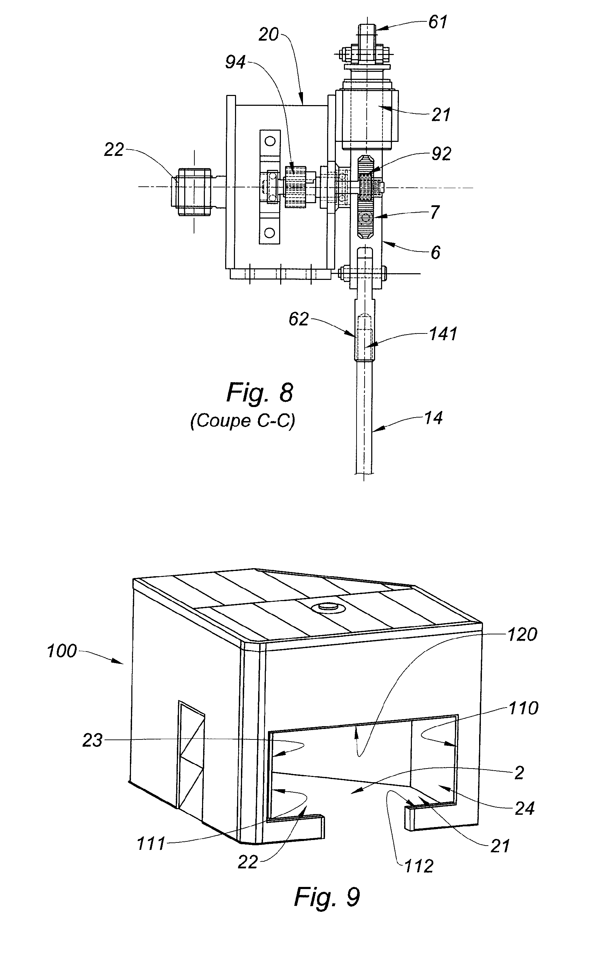

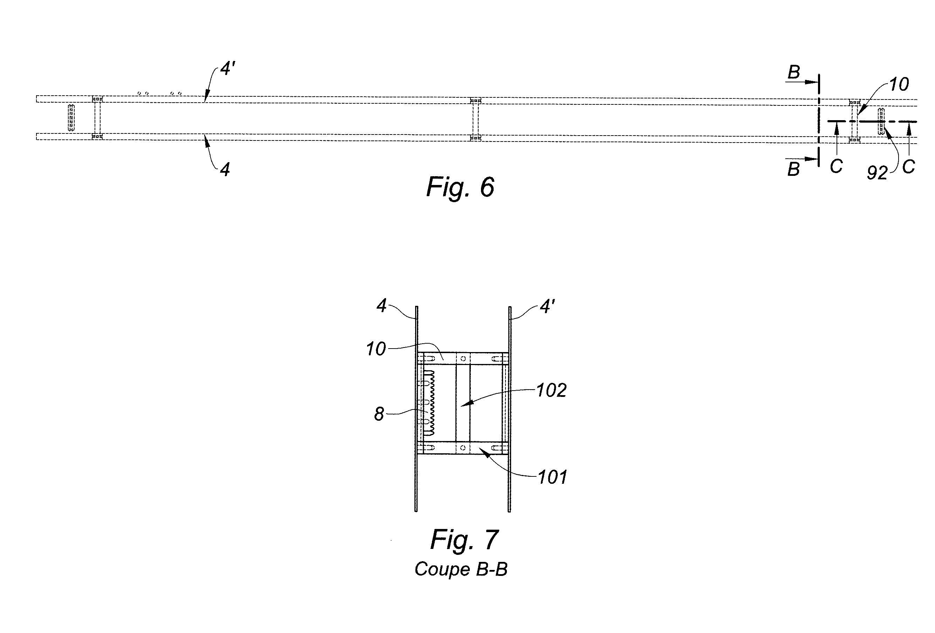

Le positionnement des moyens 7, 8, 9, 10, 102, 20 pour translater le volet supérieur 4 sont notamment représentés sur les figures 7, 8 et 9.

Ces moyens 7, 8, 9, 10, 101, 102, 20 comprennent avantageusement une première crémaillère 7 fixée sur l'arbre 6, une deuxième crémaillère 8 fixée sur le volet supérieur 4 et un dispositif d'engrènement 9 reliant les deux crémaillères 7, 8.

C'est cet ensemble formé par les deux crémaillères 7, 8 et le dispositif d'engrènement 9 qui permet une translation, en sens opposé, du volet supérieur 4 et de l'arbre 6.

Les crémaillères 7, 8 sont décalées horizontalement l'une de l'autre par l'intermédiaire du dispositif d'engrènement 9, pour des raisons d'encombrement. Le dispositif d'engrènement 9 comporte par exemple un premier engrenage 92 monté sur l'une 7 des crémaillères 7, 8, un deuxième engrenage 94 monté sur l'autre 8 des deux crémaillères 7, 8 et un arbre de liaison 93 reliant les deux engrenages 92, 94.

Cet arbre de liaison 93 est l'élément permettant de décaler les deux crémaillères 7, 8 horizontalement.

Par ailleurs, ces moyens comprennent avantageusement des moyens de guidage 10, 101, 102, 20 en translation du volet supérieur 4 par rapport au bouclier 3.

Ces moyens de guidage améliorent le guidage en translation du volet supérieur 4 par rapport à l'arbre 6, qui s'effectue par l'intermédiaire du dispositif d'engrènement 9 décrit précédemment.

Plus précisément, il est prévu un boîtier 20 dont une première partie 21 est montée fixe sur l'arbre d'entraînement 6 et dont une deuxième partie 22 définit un orifice dans lequel est logé un axe de guidage en translation 102 du volet supérieur 4.

A cet effet, l'axe de guidage en translation 102, vertical, est monté fixe sur des barres horizontales 10, 101 elles-mêmes montées fixes sur le volet supérieur 4.

Le mouvement de translation entre l'axe de guidage 102 et la deuxième partie 22 du boîtier 20 correspond à une glissière. Le mouvement en translation du volet supérieur 4 est donc parfaitement guidé, malgré le poids du volet supérieur 4.

Le dispositif d'engrènement 9 peut prévoir des engrenages 92, 94 identiques. Dans ce cas, le volet supérieur 4 effectue une translation, par rapport à l'arbre 6, dont la valeur absolue est identique à celle de la translation de l'arbre 6 par rapport au bouclier 3.

Cependant, on peut également prévoir des engrenages 92, 94 différents afin de régler le facteur de démultiplication entre d'une part, le déplacement de l'arbre 6 par rapport au bouclier 3 et d'autre part, le déplacement du volet supérieur 4 par rapport à l'arbre 6/le bouclier 3.

Par ailleurs, la cabine comportera généralement un capteur de sécurité 30, lequel permet de s'assurer que le volet supérieur est bien dans une position de fermeture avant la mise en fonctionnement du système émettant le rayonnement laser.

Avantageusement, et comme représenté sur les figures annexées, la cabine 100 est munie de deux volets supérieurs 4, 4' parallèles et s'étendant de part et d'autre du bouclier 3.

Ainsi, il peut être prévu un premier volet supérieur 4 s'étendant le long de la partie supérieure d'une première face 31 du bouclier 3, sur la largeur de l'ouverture 2 et un deuxième volet supérieur 4' s'étendant le long de la partie supérieure d'une deuxième face 32 du bouclier, opposée à la première face 31 de ce bouclier 3.

Dans ce cas, le dispositif 5, 6, 7, 8, 9, 10, 81, 91, 101, 102 est disposé entre les deux volets supérieurs 4, 4'. Il permet alors de translater, en même temps, chacun des deux volets supérieurs 4, 4' par rapport au bouclier 3, entre une position basse et une position haute et inversement.

Comme représenté sur la figure 7, les barres horizontales 10, 101 relient alors les deux volets supérieurs 4, 4'.

Par ailleurs, le dispositif comprend, de manière symétrique, une autre crémaillère (non visible sur les figures annexées) montée fixe sur l'arbre 6, une autre crémaillère 81 montée fixe sur l'autre volet supérieur 4', et un autre dispositif d'engrènement 91 entre ces deux crémaillères additionnelles.

De même, l'autre dispositif d'engrènement 91 peut être conçu de manière identique au dispositif d'engrènement 9, afin de permettre ou non une démultiplication du mouvement de translation du volet supérieur 4' par rapport au bouclier 3; vis-à-vis du mouvement de l'arbre d'entraînement 6 par rapport au bouclier 3.

Un double volet supérieur 4, 4' améliore l'étanchéité au rayonnement. Par ailleurs, cela permet de protéger le dispositif 5, 6, 7, 8, 9, 10, 81, 91, 101 quelle que soit la position du plateau tournant 1, du bouclier 3 et des volets supérieurs 4, 4' autour de l'axe de rotation R.

Dans le cadre de l'invention, le fait de prévoir un volet supérieur 4, 4', susceptible d'être translaté par rapport au bouclier 3 pour assurer l'étanchéité est particulièrement avantageux.

En effet, la course du volet supérieur 4, 4' peut être réglée lors de la conception. Ceci peut s'effectuer en dimensionnant correctement la hauteur du galet 5, ce qui règle la course de l'arbre d'entraînement 6 par rapport au bouclier 3. Ceci peut également s'effectuer en choisissant un facteur de démultiplication adéquat entre la course de l'arbre d'entraînement 6 et celle du ou de chaque volet supérieur 4, 4', par l'intermédiaire du dispositif d'engrenage 9, 91.

Cela apporte plus de flexibilité dans l'adaptation de la cabine 100 à l'application souhaitée.

Il n'est par ailleurs pas nécessaire de prévoir un moyen d'étanchéité spécifique au niveau de l'axe de rotation R du plateau tournant 1, le ou chaque volet supérieur 4, 4' assurant cette étanchéité sur toute la largeur de l'ouverture 2.

De plus, le mouvement du plateau tournant 1, du bouclier 3 et du ou de chaque volet 4, 4', peut s'effectuer sur 360°.

Ceci est lié au fait que le ou chaque volet 4, 4' assurant l'étanchéité peut être mis en position basse et ainsi ne pas être gêné dans son mouvement de rotation autour de l'axe de rotation R par le bâti de la cabine.

Cela apporte également plus de flexibilité dans la gestion de la cabine par l'utilisateur.

La mise en place d'un volet tel que décrit précédemment peut être avantageusement déclinée pour la partie inférieure de l'ouverture 2.

Pour faciliter la compréhension, nous distinguons par la suite deux zones de l'ouverture 2 située dans sa partie inférieure. Ainsi, l'ouverture 21 fera référence à la partie inférieure de l'ouverture 2 de la cabine 100 qui est située entre le plateau tournant 1 et le bâti droit 110 de la cabine formant contour de l'ouverture et l'ouverture 22 fera référence à la partie inférieure de l'ouverture 2 de la cabine 100 qui est située entre le bâti gauche 111 de la cabine formant contour de l'ouverture et le plateau tournant 1. On pourra se référer à la figure 7.

Ainsi, la cabine 100 est avantageusement munie d'au moins un volet dit inférieur 41, 41' s'étendant le long de la partie inférieure du bouclier 3 sur la largeur de l'ouverture 21 située entre le plateau tournant 1 et le bâti droit 110 de la cabine 100.

Par ailleurs, la cabine 100 comporte un dispositif 11, 12, 13, 14 pour translater le volet inférieur 41 par rapport au bouclier 3, entre une position haute et une position basse et inversement.

Ainsi, lorsque le plateau tournant 1 est actionné par le moteur 15 depuis une position d'ouverture vers une position de fermeture de la cabine 100, le volet inférieur 41 translate depuis une position haute vers une position basse dans laquelle une étanchéité entre le bouclier 3 et le contour du bâti inférieur 112 au niveau de l'ouverture 21 est assurée.

Par ailleurs, lorsque le plateau tournant 1 est actionné par le moteur 15 depuis une position de fermeture vers une position d'ouverture de la cabine 100, le volet inférieur 41 translate depuis sa position basse vers sa position haute pour permettre une rotation du bouclier 3 avec le volet inférieur 41 autour de l'axe de rotation R du plateau tournant 1.

A cet effet, le dispositif 11, 12, 13, 14 pour translater le volet inférieur 41 par rapport au bouclier 3 entre une position haute et une position basse et inversement comprend plusieurs éléments.

Il comprend un axe de guidage 11 en translation du volet inférieur 41, ledit axe étant monté fixe sur le bouclier 3.

Il comprend un moyen de guidage 12 d'une part, monté fixe sur le volet inférieur 41 et d'autre part, mobile en translation sur l'axe de guidage 11.

Il comprend également une pièce de liaison 13, par exemple en forme de U, montée fixe sur le volet inférieur 41.

Il comprend enfin une tringle 14 dont une première extrémité 141 est montée sur une extrémité 62 de l'arbre d'entraînement 6 du ou, selon le cas, de chaque volet supérieur 4, 4' et dont l'autre extrémité 142 est montée sur la pièce de liaison 13.

Grâce à cette configuration, la liaison entre la tringle 14 et l'arbre d'entraînement 6 permet de translater le volet inférieur 41 vers une position basse lorsque le ou, selon le cas, chaque volet supérieur 4, 4' passe vers une position haute et inversement.

Le mouvement du volet inférieur 41 est donc directement lié à celui de l'arbre d'entraînement 6 du ou, selon le cas, de chaque volet supérieur 4, 4', si bien que le volet inférieur 41 effectue une translation dans un sens identique à celui de l'arbre 6, mais opposé à celui du ou de chaque volet supérieur 4, 4'.

Bien entendu, tous les mouvements de translation mentionnés s'effectuent selon la direction définie par l'axe de rotation R du plateau tournant 1, lequel est généralement vertical.

Comme représenté sur la figure 5 annexée, la cabine 100 est avantageusement munie de deux volets inférieurs 41, 41' parallèles et s'étendant de part et d'autre du bouclier 3.

Plus précisément, il est prévu un premier volet inférieur 41 s'étendant le long de la partie inférieure d'une première face 31 du bouclier 3 et monté sur l'axe de guidage 11 par l'intermédiaire du moyen de guidage 12.

Il est également prévu un deuxième volet inférieur 41' s'étendant le long de la partie inférieure d'une deuxième 32 face du bouclier 3, laquelle est opposée à la première face 31 de ce bouclier 3, par l'intermédiaire de la pièce de liaison 13.

Pour assurer la translation des deux volets inférieurs 41, 41', le dispositif 11, 12, 13, 14 est agencé de sorte que la translation des deux volets inférieurs 41, 41' s'effectue en même temps par rapport au bouclier 3, entre une position haute et une position basse et inversement.

A cet effet, il convient de noter que la forme en U de la pièce de liaison permet le lien entre les deux volets inférieurs 41, 41'.

Par ailleurs, le dispositif 11, 12, 13, 14 est alors disposé entre les deux volets inférieurs 41, 41' afin de procurer les mêmes avantages que ceux décrits précédemment pour les volets supérieurs 4, 4'.

Le ou chaque volet inférieur 41, 41' décrit précédemment a été décrit en lien avec l'ouverture 21 située entre le plateau tournant 1 et le bâti droit 110 de la cabine 100.

Cette description pourrait cependant être effectuée de manière identique pour l'ouverture 22 située entre le bâti gauche 111 de la cabine 100 et le plateau tournant 1.

Par ailleurs, des volets inférieurs 41, 41', 42 seront avantageusement prévus de part et d'autre du plateau tournant 1.

Dans ce cas, la cabine 100 comprend au moins un premier volet inférieur 41, 41' s'étendant le long de la partie inférieure du bouclier 3 sur la largeur de l'ouverture 21 située entre le plateau tournant 1 et le bâti droit 110 de la cabine 100.

Elle comprend également au moins un deuxième volet inférieur 42 s'étendant le long de la partie inférieure du bouclier 3 sur la largeur de l'ouverture 22 située entre le bâti gauche 111 de la cabine 100 et le plateau tournant 1.

Elle comprend encore un dispositif associé à chacun dudit au moins un premier volet inférieur 41, 41' et dudit au moins un deuxième volet inférieur 42 pour translater le volet inférieur concerné par rapport au bouclier 3, entre une position haute et une position basse et inversement et ce, selon la direction définie par l'axe R.

Ce dispositif est référencé 11, 12, 13, 14 pour les volets inférieurs 41, 41' mais n'est pas représenté sur les figures annexées pour le volet inférieur 42. Cependant, ce dispositif est identique pour le volet inférieur 42, lequel peut également être doublé comme décrit précédemment pour les autres volets.

Lorsque des volets inférieurs sont prévus de part et d'autre du plateau tournant 1 au niveau des ouvertures 21, 22, chacun des deux dispositifs pour translater un volet inférieur associé à l'une des ouvertures 21, 22 de la cabine 100 est avantageusement relié mécaniquement, par exemple par l'intermédiaire d'une tringle telle que décrite précédemment, à l'un et l'un seulement d'un dispositif pour translater ledit au moins un volet supérieur.

Dans ce cas, on comprend donc que les volets supérieurs seront associés à deux dispositifs de translation desdits volets chacun monté sur une tringle propre connecté à l'un des dispositifs de translation pour les volets inférieurs.

Par ailleurs, il convient de noter que des volets latéraux peuvent être prévus, avec une conception similaire à celle d'un volet supérieur 4, 4'.

Cependant, il est plus avantageux, notamment en termes de coûts et de simplicité, d'assurer l'étanchéité de la cabine 100 sur les parties latérales 23, 24 de l'ouverture 2 par l'intermédiaire de joints élastiques tout à fait classiques dans le domaine. Un exemple de joint susceptibles d'être utilisés est donné dans le document US 6 314 686.

## Revendications

1. Cabine (100) de protection contre un rayonnement électromagnétique, par exemple un rayonnement laser, destiné à être émis par un système à loger à l'intérieur de ladite cabine, laquelle comprend :
- un plateau tournant (1) autour d'un axe de rotation (R) capable de transporter des pièces, lesquelles sont destinées à être soumises au rayonnement électromagnétique puis récupérées, à travers une ouverture (2) formée dans la cabine ;
- un bouclier (3) contre le rayonnement électromagnétique monté fixe sur le plateau tournant (1), de sorte que ce bouclier (3) est entraîné en rotation avec le plateau tournant (1) autour de son axe de rotation (R) lorsque ce dernier est actionné ; **caractérisée en ce qu'**elle comprend :
- au moins un volet dit supérieur (4, 4') s'étendant le long de la partie supérieure du bouclier (3) sur la largeur de l'ouverture (2) ; et
- au moins un dispositif (5, 6, 7, 8, 9, 10, 20, 81, 91, 101, 102) pour translater le ou chaque volet supérieur, par rapport au bouclier, entre une position basse et une position haute et inversement selon la direction définie par l'axe de rotation (R) du plateau tournant, ledit au moins un dispositif comprenant :
• un galet (5) monté fixe sur le bâti supérieur (120) de la cabine défini au niveau de l'ouverture ;
• un arbre (6), monté mobile en translation à la fois par rapport au bouclier (3) et au ou à chaque volet supérieur (4, 4'), comportant une extrémité (61) susceptible d'être mise en contact avec ledit galet (5) lors du passage de la position d'ouverture à la position de fermeture de la cabine pour provoquer la translation de l'arbre (6) par rapport au bouclier (3) ; et
• des moyens (7, 8, 9, 10, 20, 81, 91, 101, 102) disposés entre l'arbre (6) et le ou chaque volet supérieur (4, 4') pour translater ledit au moins un volet supérieur (4, 4') par rapport à l'arbre (6) dans un sens opposé au sens de translation de l'arbre (6) par rapport au bouclier (3) ;
de sorte que, d'une part, lorsque le plateau tournant (1) est actionné depuis une position d'ouverture vers une position de fermeture de la cabine, le ou chaque volet supérieur (4, 4') translate depuis sa position basse vers sa position haute dans laquelle une étanchéité entre le bouclier et le contour du bâti supérieur (120) défini au niveau de l'ouverture (2) est assurée et de sorte que, d'autre part, lorsque le plateau tournant (1) est actionné depuis une position de fermeture vers une position d'ouverture de la cabine, le ou chaque volet supérieur (4, 4') translate depuis sa position haute vers sa position basse pour permettre une rotation du bouclier (3) avec le ou chaque volet supérieur (4, 4') autour de l'axe de rotation (R) du plateau tournant (1).

2. Cabine selon la revendication 1, **caractérisée en ce que** lesdits moyens (7, 8, 9, 10, 20, 81, 91, 101, 102) pour translater le ou l'un des volet(s) par rapport à l'arbre (6) comprennent une première crémaillère (7) fixée sur l'arbre (6), une deuxième crémaillère (8, 81) fixée sur le volet supérieur (4, 4') et un dispositif d'engrènement (9, 91) reliant les deux crémaillères (7, 8, 81).

3. Cabine selon la revendication précédente, **caractérisée en ce que** le dispositif d'engrènement (9) comprend :
- un premier engrenage (92) monté sur l'une (7) des crémaillères (7, 8) ;
- un deuxième engrenage (94), monté sur l'autre (8) des deux crémaillères (7, 8), dont le diamètre est différent du diamètre du premier engrenage (92) ;
- un arbre (93) reliant les deux engrenages (92, 94),
de sorte que le déplacement de l'arbre (6) par rapport au bouclier (3) est démultiplié en comparaison au déplacement du volet supérieur (4, 4') par rapport au bouclier (3).

4. Cabine selon l'une des revendications précédentes, **caractérisée en ce que** lesdits moyens (7, 8, 9, 10, 20, 81, 91, 101, 102) pour translater le ou l'un des volet(s) supérieurs par rapport à l'arbre (6) comprennent également :
- un boîtier (20) monté fixe sur l'arbre (6) ;
- un axe de guidage (102) monté fixe sur le ou chaque volet supérieur (4, 4'), ledit axe de guidage (102) étant monté selon une liaison glissière par rapport au boîtier (20).

5. Cabine selon l'une des revendications précédentes, **caractérisée en ce qu'**elle comprend :
- un premier volet supérieur (4) s'étendant le long de la partie supérieure d'une première face (31) du bouclier (3), sur la largeur de l'ouverture (2) ;
- un deuxième volet supérieur (4') s'étendant le long de la partie supérieure d'une deuxième face (32) du bouclier, opposée à la première face (31) de ce bouclier (3) ; et
- un dispositif (5, 6, 7, 8, 9, 10, 81, 91, 101) pour translater, en même temps, chacun des deux volets (4, 4') par rapport au bouclier (3), entre une position basse et une position haute et inversement, ce dispositif étant disposé entre les deux volets (4, 4').

6. Cabine selon l'une des revendications précédentes, caractérisée en qu'elle comprend :
- au moins un volet dit inférieur (41, 41', 42) s'étendant le long de la partie inférieure du bouclier (3) sur la largeur de l'ouverture (21, 22) située entre le plateau tournant (1) et le bâti gauche ou droit (110, 111) de la cabine ;
- un dispositif (11, 12, 13, 14) pour translater le ou chaque volet inférieur (41, 41', 42), par rapport au bouclier (3), entre une position haute et une position basse et inversement, selon la direction définie par l'axe de rotation (R) du plateau tournant (1), de sorte que, d'une part, lorsque le plateau tournant (1) est actionné depuis une position d'ouverture vers une position de fermeture de la cabine, le ou chaque volet inférieur (41, 41', 42) translate depuis sa position haute vers sa position basse dans laquelle une étanchéité entre le bouclier (3) et le bâti gauche ou droit (110, 111) de la cabine défini au niveau de l'ouverture est assurée et de sorte que, d'autre part, lorsque le plateau tournant (1) est actionné depuis une position de fermeture vers une position d'ouverture de la cabine, le ou chaque volet inférieur (41, 41', 42) translate depuis sa position basse vers sa position haute pour permettre une rotation du bouclier (3) avec le ou chaque volet inférieur (41, 41', 42) autour de l'axe de rotation (R) du plateau tournant (1).

7. Cabine selon la revendication précédente, **caractérisée en ce que** le dispositif (11, 12, 13, 14) pour translater le ou chaque volet inférieur (41, 41') par rapport au bouclier (3) entre une position haute et une position basse et inversement, comprend :
- au moins un axe de guidage (11) en translation du ou de chaque volet inférieur (41, 41'), ledit axe étant monté fixe sur le bouclier (3);
- un moyen de guidage (12) monté fixe sur le volet (41) ou l'un des volets (41, 41') et mobile en translation le long de l'axe de guidage (11);
- une pièce de liaison (13), par exemple en forme de U, montée fixe sur le ou chaque volet (41, 41');
- une tringle (14) dont une première extrémité (141) est montée sur une extrémité (62) de l'arbre d'entraînement (6) du ou de chaque volet supérieur (4, 4') et dont l'autre extrémité (142) est montée sur la pièce de liaison (13), la liaison entre la tringle (14) et l'arbre d'entraînement (6) permettant de translater le ou chaque volet inférieur (41, 41') vers une position basse lorsque le ou chaque volet supérieur (4, 4') passe dans une position haute et inversement.

8. Cabine selon l'une des revendications 6 ou 7, **caractérisée en ce qu'**elle comprend :
- un premier volet inférieur (41) s'étendant le long de la partie inférieure d'une première face (31) du bouclier (3) et monté sur l'axe de guidage (11) par l'intermédiaire du moyen de guidage (12) ;
- un deuxième volet inférieur (41') s'étendant le long de la partie inférieure d'une deuxième (32) face du bouclier (3), laquelle est opposée à la première face (31) de ce bouclier (3), par l'intermédiaire de la pièce de liaison (13) ;
- un dispositif (11, 12, 13, 14) pour translater les deux volets inférieurs (41, 41'), en même temps, par rapport au bouclier (3), entre une position haute et une position basse et inversement.

9. Cabine selon l'une des revendications 5 à 8, **caractérisée en ce qu'**elle comprend :
- au moins un premier volet inférieur (41, 41') s'étendant le long de la partie inférieure du bouclier (3) sur la largeur de l'ouverture (21) située entre le plateau tournant (1) et le bâti droit (110) de la cabine ;
- au moins un deuxième volet inférieur (42) s'étendant le long de la partie inférieure du bouclier (3) sur la largeur de l'ouverture (22) située entre le bâti gauche (111) de la cabine et le plateau tournant (1) ;
- un dispositif (11, 12, 13, 14) associé à chacun dudit au moins un premier volet inférieur (41, 41') et dudit au moins un deuxième volet inférieur (42) pour translater le volet inférieur concerné par rapport au bouclier (3), entre une position haute et une position basse et inversement.

10. Cabine selon la revendication précédente, **caractérisée en ce que** chacun des deux dispositifs pour translater un volet inférieur (41, 41', 42) associé à l'une des ouvertures (21, 22) de la cabine est relié mécaniquement, par exemple par l'intermédiaire d'une tringle, à l'un et l'un seulement d'un dispositif (5, 6, 7, 8, 9, 10, 20, 81, 91, 101, 102) pour translater ledit au moins un volet supérieur (4, 4').
